# EUROPEAN PATENT APPLICATION

(11) **EP 4 714 240 A1**
(43) Date of publication of application: **25.03.2026**
(21) Application number: 25189981.1
(22) Date of filing: 16.07.2025
(51) Int. Cl.: A01B 69/00

(54) **LANDMARKING NAVIGATION SYSTEMS AND METHODS FOR SAME**

(30) Priority: 16.07.2024 US 202463672213 P
(71) Applicant: Raven Industries, Inc., Sioux Falls, South Dakota 57117-5107 (US)
(72) Inventor: KOCER, Jared Ernest, Sioux Falls, South Dakota, 57110 (US); RUST, Matthew K., Chandler, Arizona, 85286 (US)
(74) Representative: Pfenning, Meinig & Partner mbB

(57) **Abstract**

A landmarking navigation system includes one or more sensors that observe one or more features in a field or proximate to a field. One or more processors are in communication with the one or more sensors. The one or more processors landmark the one or more features. Landmarking includes identifying the one or more features as landmarks, respectively. The landmarks are catalogued as catalogued landmarks. The one or more processors landmark navigate the agricultural vehicle. Landmark navigating includes observing the one or more features in the field with the sensors and comparing the observations with the catalogued landmarks. The features are identified as the catalogued landmarks, respectively. Vehicle kinematics (one or more of position, heading, speed, pitch, yaw or roll) of the agricultural vehicle are determined relative to the identified catalogued landmarks.

## Description

### PRIORITY APPLICATIONS

This application claims the benefit of priority of U.S. Provisional Patent Application Serial No. 63/672,213, filed July 16, 2024, the content of which is incorporated herein by reference in its entirety.

### COPYRIGHT NOTICE

A portion of the disclosure of this patent document contains material that is subject to copyright protection. The copyright owner has no objection to the facsimile reproduction by anyone of the patent document or the patent disclosure, as it appears in the Patent and Trademark Office patent files or records, but otherwise reserves all copyright rights whatsoever. The following notice applies to the software and data as described below and in the drawings that form a part of this document: Copyright Raven Industries, Inc. of Sioux Falls, SD, USA. All Rights Reserved.

### TECHNICAL FIELD

This document pertains generally, but not by way of limitation, to navigation of agricultural vehicles and implements.

### BACKGROUND

Agricultural vehicles are driven through fields, along roads or the like. In some example agricultural vehicles navigation (e.g., determining a travel direction, path or the like) and driving are conducted by the operator or driver. For instance, the operator has knowledge of field, field access, roads, or the like and drives the agricultural vehicle and associated implements according to that knowledge and experience.

In other examples, global navigation systems and associated receivers, such as global navigation satellite systems (GNSS), are provided with agricultural vehicles to facilitate navigation. The Global Navigation Satellite System (GNSS) is one example of such a system. GNSS permits the identification of an agricultural vehicle location and heading and thereby eases navigation of agricultural vehicles. In still other examples, GNSS permits the conduct of autonomous operation of an agricultural vehicle, implements or the like. For example, a GNSS receiver provides the location and heading of the agricultural vehicle thereby permitting a degree of autonomous driving or agricultural operation conduct within a field based on location and heading.

In other examples, for instance vineyards, detailed scans are conducted of the vineyard with a drone or other unmanned air vehicle (UAV). The scans are collected and synthesized into a vineyard map, such as a real time kinematics (RTK) vineyard map. The synthesized vineyard map is provided to a vineyard spray vehicle, and a controller of the vineyard spray vehicle conducts spraying operations in the vineyard based on the synthesized vineyard map and sensors that detect and permit identification of grape vines, foliage or the like relative to the map.

### OVERVIEW

The present inventors have recognized, among other things, that a problem to be solved can include autonomously conducting agricultural operations (e.g., one or both of autonomous driving or operation of an implement) in a field based on landmarks without first generating or inputting a map of landmarks including landmark locations to the agricultural vehicle.

For instance, in some example systems scans are conducted of a region, such as a vineyard, to identify grapevines, foliage or the like (collectively grapevines). The scans are synthesized into a real time kinematics (RTK) vineyard map. Once the map is synthesized it is provided to a vineyard spray vehicle. The vineyard spray vehicle includes a controller and a sensor to identify grapevines relative to the synthesized map and thereby permit driving of the spray vehicle between rows of grapevines and controlled spraying of grapevines proximate to the spray vehicle. The initial scans of the vineyard are conducted with an unmanned vehicle, such as a UAV. The RTK vineyard map is then prepared and submitted to the vineyard spray vehicle. Accordingly, a laborious series of steps including an additional vehicle are conducted before the autonomous spray operation may be conducted.

Further, grapevines are relatively consistent from a sensing perspective (e.g., have a consistent color, profile, are densely populated at regular intervals or the like), are proximate to the sprayer vehicle and are thereby in some examples readily identified. In comparison an agricultural field including barren soil, tilled soil, seedling or vegetative stage crops, or the like does not include the consistent and readily identified grapevines of a vineyard. Further, in some examples features in an agricultural field are relatively scarce (e.g., one or more of spread out or relatively distant) in comparison to a more densely populated vineyard, and include irregular non-crop based features, such as fences, fence posts, gates, rocks, telephone poles, silos, barns, trees or the like); and these non-crop based features are potentially outside of the bounds of the agricultural field. Additionally, these features may vary significantly in their respective profiles (e.g., colors, shape, size or the like) further aggravated by varied distance from a sensor. For instance, wooden fence posts often have different shapes, colors (depending on weathering, age or wood type), sizes when viewed from different distances, or the like that frustrate consistent identification. Further, identification of seedling or vegetative crops (where crops are present) is difficult because of the small profiles of the crops.

The present subject matter can help provide a solution to this problem, such as by landmarking navigation systems that scan, detect and identify landmarks in and proximate to fields (collectively, in fields) while conducting an agricultural operation, for instance with GNSS (GPS, GLONASS, Galileo, BeiDou, QZSSS, IRNSS, or the like) based navigation. The landmarking navigation systems described herein, in one example, indexes identified landmarks in a global coordinate system (e.g., longitude/latitude, x/y/z or the like) also while conducting the agricultural operation.

In circumstances causing loss of GNSS signals (foliage, overhanging trees, buildings, electromagnetic interference, solar flares, multi-path signals through obstructions, operator preference, or the like), the example landmarking navigation system provides supplemental navigation to permit continued operation of the agricultural vehicle. For example, upon detecting the loss of GNSS signal the control system of the agricultural vehicle transitions to landmark based navigation. The previous operation of the agricultural vehicle in a field permitted detection, identification, indexing and cataloging of one or more landmarks, for instance in one or more of the field, proximate to the field (e.g., outside the field) or the like. The one or more landmarks include, but are not limited to, fences, fence posts, gates, rocks, telephone poles, wind turbines, silos, barns, trees, crops (if visible), bodies of water, or the like. The landmarking navigation system continues to monitor for the one or more landmarks (optionally while detecting additional landmarks) for instance with one or more of a camera, stereo camera, LIDAR, radar, or the like; and upon identification of a previously catalogued landmark, retrieves the previously indexed global position of the landmark. The landmarking navigation system determines the agricultural vehicle position relative to the catalogued landmark (e.g., a first catalogued landmark), for instance through analysis of the present observation of the landmark relative to the previously catalogued observation, such as an image or scan, of the landmark. The landmarking navigation system then conducts landmark based navigation of the agricultural vehicle relative to the landmark. The catalogued landmark is in some examples, a fiducial marker, indicia, or the like generated by the system and employed for navigation.

As the agricultural vehicle continues moving to conduct the agricultural operation the landmarking navigation system detects and identifies other previously catalogued landmarks (e.g., a second catalogued landmark having an indexed global position). As the first catalogued landmark drops out of view by one or more sensors, the landmarking navigation system conducts continued navigation relative to the second catalogued landmark, referred to in some instances herein as a 'handoff'. Optionally, the landmarking navigation system implements a different navigation device, such as an IMU, as an intermediate form of navigation if the second catalogued landmark is not immediately available.

Upon return of a GNSS signal the control system for the agricultural vehicle (optionally including the landmarking navigation system) selects and implements GNSS based navigation again, for instance after reception of a GNSS signal over a threshold time window. In one example, the landmarking navigation system continues to detect, identify, index and catalog landmarks while conducting GNSS, inertial measurement unit (IMU) or landmark based navigation. Accordingly, seamless transitions from other navigation types to landmark based navigation is readily conducted to ensure continuous operation of the agricultural vehicle and one or more implements.

This overview is intended to provide an overview of subject matter of the present patent application. It is not intended to provide an exclusive or exhaustive explanation of the invention. The detailed description is included to provide further information about the present patent application.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
- Figure 1A: is a perspective view of one example of an agricultural assembly including an agricultural vehicle and an agricultural implement.
- Figure 1B: is another perspective view of the agricultural assembly of Figure 1A.
- Figure 1C: is a plan view of the agricultural assembly of Figure 1A.
- Figure 2: is a schematic view of one example of a field, field features, and an agricultural assembly.
- Figure 3A: is a schematic view of one example of an autonomous agricultural vehicle control system.
- Figure 3B: is a schematic view of one example of a landmark navigation device.
- Figure 4A: is a schematic view of the field of Figure 2 with the agricultural assembly employing a first navigation device and identifying landscape features as landmarks.
- Figure 4B: is a schematic view of the field of Figure 2 with the agricultural assembly conducting ongoing identification of landscape features as landmarks.
- Figure 4C: is a schematic view of the field of Figure 2 with the agricultural assembly employing an example landmark navigation device.
- Figure 4D: is a schematic view of the field of Figure 2 with the agricultural assembly employing the landmark navigation device and transitioning between landmarks.

### DETAILED DESCRIPTION

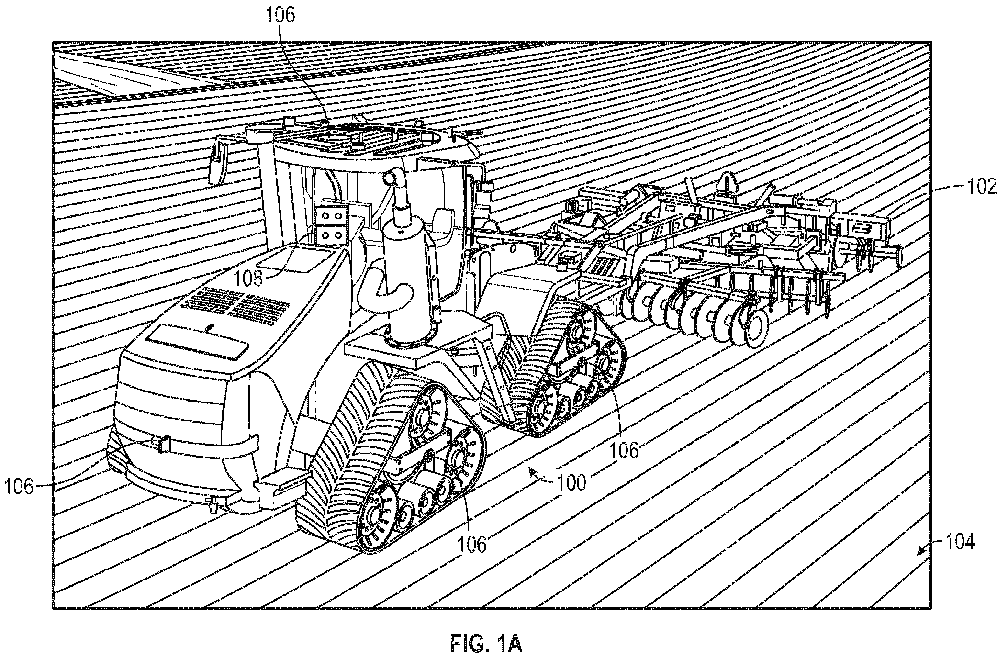

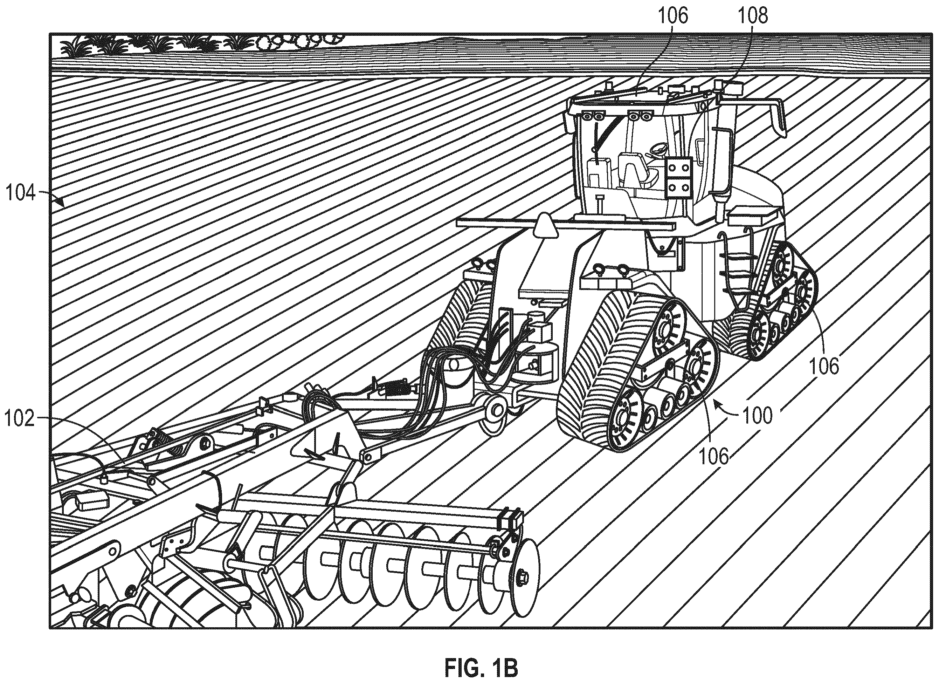

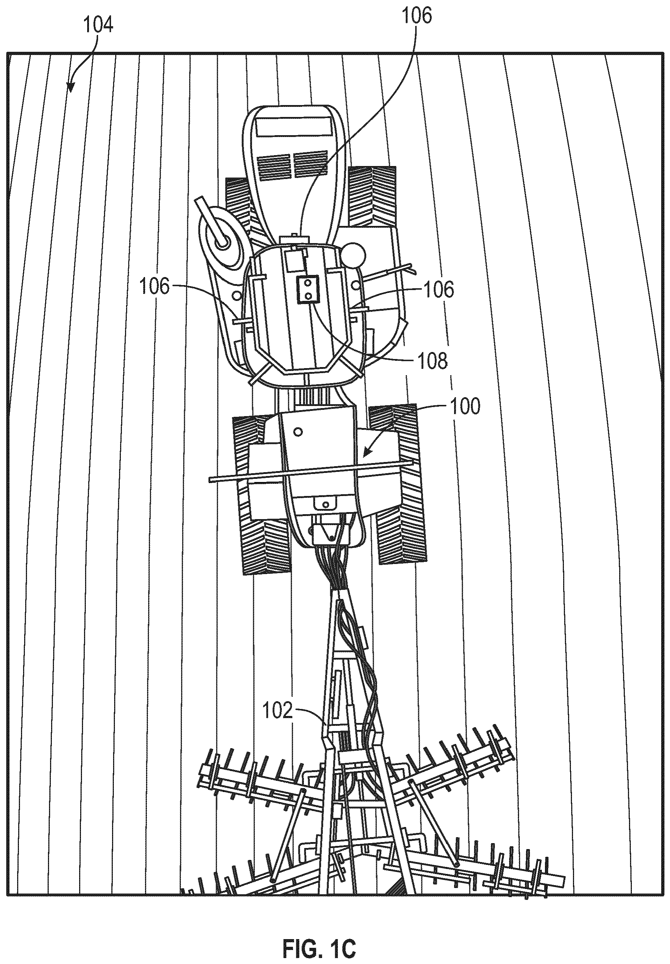

Figure 1A is a perspective view of one example of an agricultural vehicle 100, such as, but not limited to, a tractor, combine, harvester, sprayer, truck or the like. One or more agricultural implements 102 are coupled with the vehicle 100. Figures 1B and 1C provide supplemental views of the agricultural vehicle 100 and the agricultural implement 102. In the example shown in Figure 1A, the implement 102 includes a tiller. In other examples the implement 102 includes, but is not limited to, a tiller, cultivator, planter, seeder, mower, baler, sprayer, harvester head or the like. The vehicle 100 and implement 102 (collectively referred to as an agricultural assembly) are in a field 104 and conducting one or more agricultural operation. For instance, in Figure 1A, the agricultural assembly 100 is conducting a tillage operation.

As further shown in Figure 1A, the vehicle 100 (and optionally the implement 102) include one or more sensors 106. The sensors 106 include, but are not limited to, radar, LIDAR, ultrasound, camera, stereocamera, video camera, composite sensors, wheel speed sensors, or the like. In one example a plurality of sensors 106 are consolidated in a suite, such as a roof camera array of sensors that observe in one or more directions relative to the agricultural vehicle 100 or implement 102 (e.g., in forward, lateral, rearward directions, or the like).

As described herein, the sensors 106 conduct observations around the agricultural assembly 100. For instance, the sensors provide vision sensing for crops, soil, or the like. As further described herein, the sensors 106 observe and permit detection and identification of landmarks to facilitate landmark based navigation of the agricultural vehicle 100. The sensors 106, in another example, conduct in situ detection and identification of landmarks (in combination with the control system 108) in the field 104 including landmarks within the bounds of the field 104, proximate the field 104, or observable from the field 104. For example, the detection and identification of landmarks is conducted during an agricultural operation, while the agricultural vehicle 100 is employing global navigation satellite system (GNSS), real time kinematic (RTK) type navigation, inertial measurement unit (IMU) based navigation, or landmark based navigation. The sensors 106 thereby permit the observation, detection, and identification of landmarks in process of the agricultural operation. In other examples, the sensors 106 include wheel speed sensors that assist with odometry of the vehicle 100 (e.g., as part of a landmark based navigation system).

Referring again to Figure 1A, one example of a control system 108 is illustrated. The control system 108 includes one or more processors such as, but not limited to, a field computer, autonomous operating system, semi-autonomous operating system or the like. In one example, the control system 108 includes one or more navigation systems including, but not limited to, a landmarking navigation system, inertial measurement unit (IMU) system, global navigation satellite system (GNSS) system or the like.

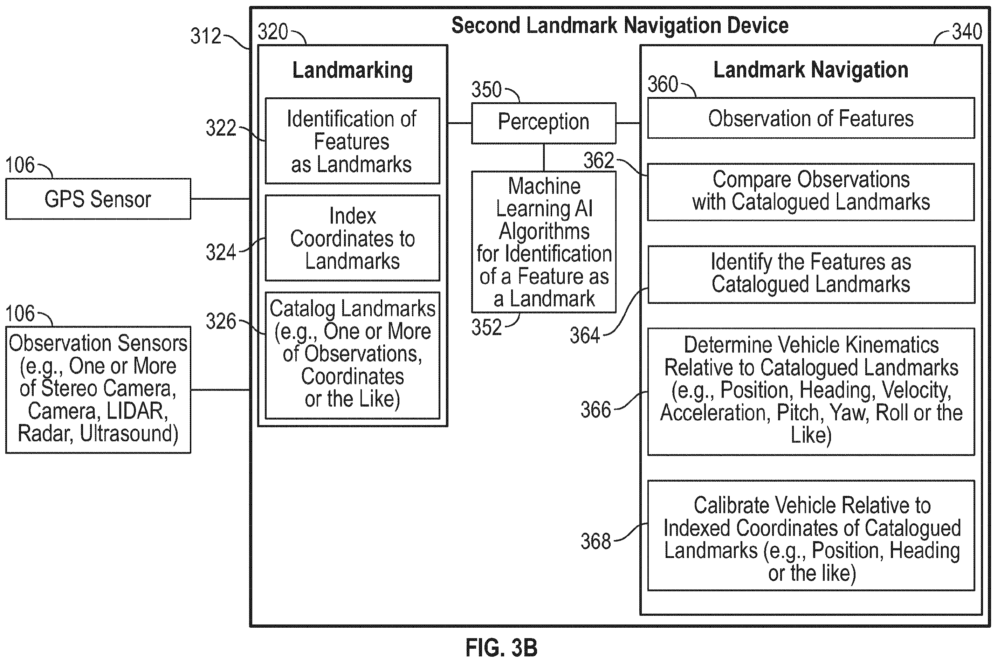

As described herein, the control system 108 receives observations (e.g., signals) from the sensors 106 and conducts identification and indexing of one or more landmarks. The control system 108 includes a perception module 350 (e.g., processor, circuit or the like) having access to a library of landmark features, such as images, characteristics, or the like. The perception module 350 facilitates identification of landmarks for instance through comparison of sensor 106 input (e.g., images, video, radar or LiDAR return signals, or the like) to the library of landmark features. Correspondence between the sensor input and a landmark feature from the library that satisfies an identification threshold (e.g., within a confidence value of 70 percent, 80 percent, 90 percent, or the like) initiates identification of the landmark as corresponding to the stored landmark feature, see identification module 322 in Figure 3B. The control system 108 indexes identified landmarks, for instance providing coordinates (e.g., x/y/z, longitude and latitude, radius and angle, or the like) to the identified landmark. See the indexing module 324 in Figure 3B. The identified and indexed landmark is catalogued (e.g., added to the library of landmark features, included in a field specific library, or the like) and is thereafter available for employment in landmark based navigation. See the cataloging module 326 in Figure 3B. The identification, indexing, and cataloging of landmarks is, in one example, done in situ relative to an agricultural operation. For example, as the agricultural vehicle 100 and implement 102 are conducting an agricultural operation landmarks are identified, indexed, and catalogued.

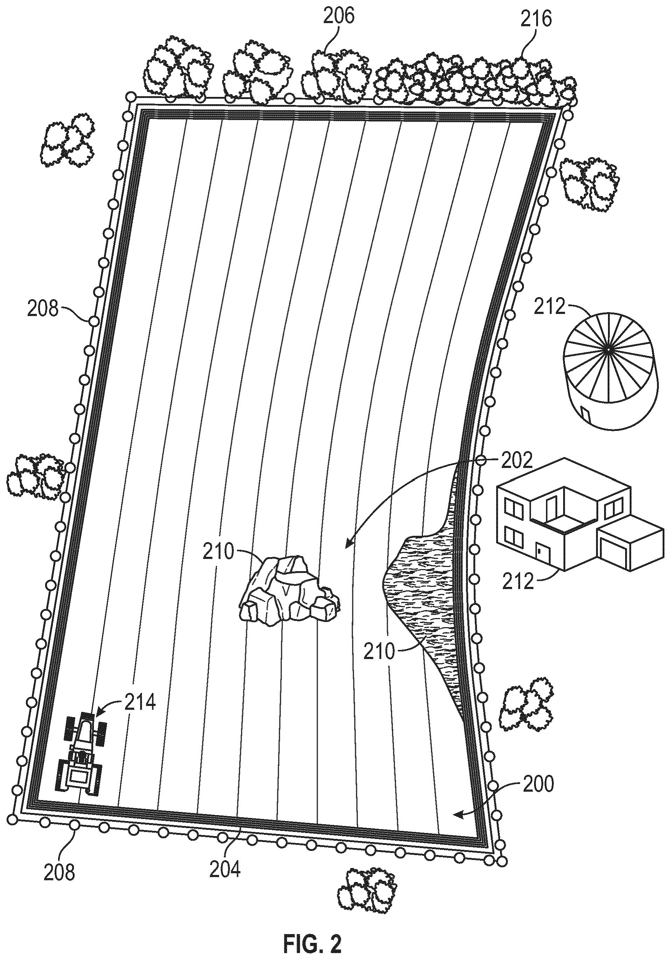

Referring now to Figure 2, an example plan view of a field 200 is shown schematically. In various examples the field 200 undulates (has hills and valleys), is flat, includes upstanding crops, is barren (e.g., tilled or having wild vegetation), or the like. In other examples, the field 200 has one or more features that are scattered in the field, potentially with little or no organization. For instance, rocks, bodies of water, depressions (ditches or culvert) or the like are static features that are detectable with the sensors 106 of the landmarking navigation system described herein. In other examples, the field 200 has features along or outside the boundary, such as fences, fence posts, gates, telephone poles, trees, brush, buildings or the like. These features, whether in the field 200, proximate the field 200, or the like are collectively referred to as features in the field 200. As described herein, these features are in some instances detected, identified, or indexed as landmarks and employed with the landmark navigation system to conduct landmark based navigation of the agricultural assembly of one or more of the agricultural vehicle 100 (214 in Figure 2) or the agricultural implement 102.

The field 200 includes a field interior 200 and a field boundary 204. In some examples, the field interior 200 includes one or more of seedling, vegetative or larger crops. In other examples, the field interior 200 is barren, tilled, covered with wild vegetation or the like. In still other examples one or more features are present within a field including, but not limited to, rocks, trees, stumps, ditches, bodies of water, culverts, crops, furrows, windmills, wells, or the like. Optionally, the one or more features are scarce, for instance irregularly scattered in the field. As further shown in Figure 2, the example field boundary 204 includes one or more of headlands, fence bounded edges of the field, culverts, ditches or the like. In one example features within and proximate to the field 200 are identified as landmarks and are indexed with coordinates and employed for landmark based navigation of the agricultural vehicle 214.

Referring again to Figure 2 example features are noted in and around the field 200 (e.g., collectively, in the field 200). For example, one or more different types of trees 206 are provided proximate the field boundary 204. As described herein, the example trees 206 are features that are identified as landmarks and are indexed with coordinates and optionally employed with landmark based navigation using the system described herein.

Another example feature shown in Figure 2 are fences, or fence posts 208. The fence posts 208 include, but are not limited to, one or more of wooden, metal, polymer or other posts, gates, wires, planks or the like provided around or in portions of a field. Additionally features shown in Figure 2 include terrain features 210, such as rocks, bodies of water, depressions or the like. In still other examples, the field 200 includes one or more structures 212. The structures 212 include, but are not limited to, one or more of buildings, sheds, barns, homes, silos, warehouses, windmills, wells, or the like. In additional examples brush or overgrown plants 216 cover or obscure one or more features, such as a fence, fence posts, an underlying tree trunk or the like. Optionally, these features 216 are identifiable from sensor 106 input and indexed. As described herein, these features 206, 208, 210, 212 are features that are identified as landmarks and indexed with coordinates and are available for conduct of landmark based navigation of the agricultural vehicle 214 and an associated implement.

In another example, one or more agricultural vehicles 214 are in the field 200 including proximate the field 200. The agricultural vehicle 214 includes one or more of the sensors 106 and the control system 108 described herein including a landmark based navigation system. Optionally, an agricultural vehicle 214 is another feature in the field 200 that is detectable with sensors 106 (e.g., of another vehicle) and is identifiable as a landmark. In this example, the vehicle 214, if parked, is identifiable as a static landmark and has indexed coordinates as with other features described herein. In yet another example, the vehicle 214 is moving. In such an example, one or more of coordinates and updating coordinates (reflecting movement) are provided to the control system 108 to update the indexed position of the vehicle 214 as a landmark. For instance, coordinates and updates of the same are relayed by the first vehicle to the second vehicle to permit landmark indexing of the first vehicle. In another example, the second vehicle monitors movement of the first vehicle and determines the indexing of the first vehicle and updates the same.

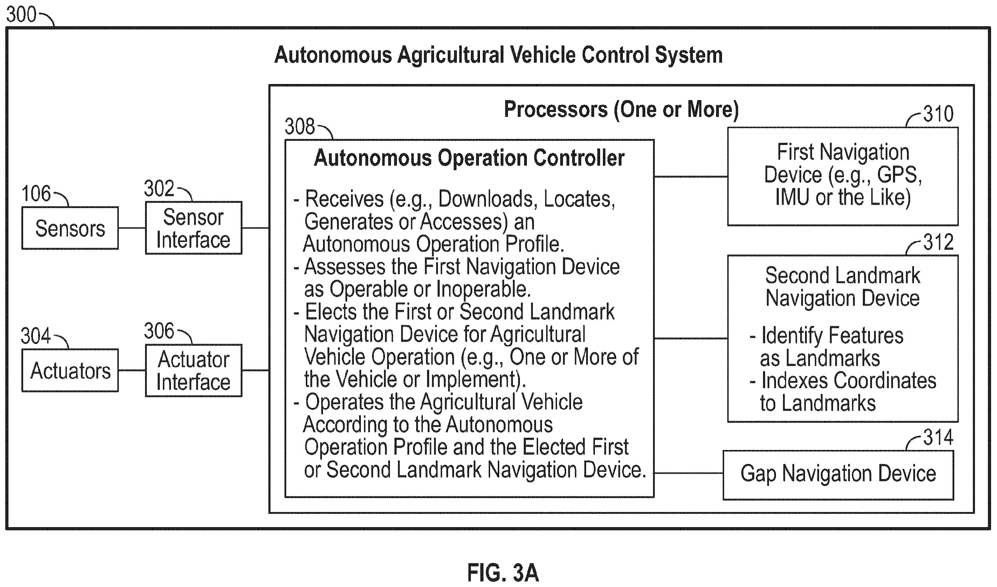

Figures 3A, 3B show one example of an autonomous agricultural vehicle control system 300, for instance a component of the control system 108 previous described herein. As described herein, the system 300 includes a landmark navigation module 312 that conducts navigation (and permits autonomous operation) based on catalogued landmarks. Additionally, the landmark navigation module 312, in another example, includes elements (e.g., one or more of 322, 324, 326, 350, 352) that permit landmarking of various features in the field to facilitate landmark based navigation.

As shown in Figure 3A, the sensors 106 are interconnected with the autonomous agricultural vehicle control system 300 with a sensor interface 302, such one or more of a bus, software interface or the like. The sensors 106 include, but are not limited to, radar, LIDAR, ultrasound, camera, stereocamera, video camera, composite sensors, wheel speed sensors, or the like. As described herein the sensors 106 observe the area proximate to the vehicle 100 (or implement 102) in the manner of a vision system to permit the autonomous driving of the vehicle 100 and implement 102 while conducting agricultural operations, and optionally while transitioning between operations (e.g., from field to field, field to shed, along roads, or the like). In one example, the observations of the sensors 106 are interpreted to detect, identify, and index landmarks, for instance to permit landmark based navigation of the vehicle 100 (including automated driving). The sensors 106 in combination with the system 300 optionally conduct in situ identification and indexing of landmarks. The identified landmarks are then employed as reference indicia for landmark based navigation. Optionally, landmark based navigation is conducted as a second form of navigation relative to a first form of navigation, such as GNSS, RTK based or the like navigation. In other examples, landmark based navigation is conducted as a primary form of navigation either alone, or with a secondary form of navigation.

In a similar manner, one or more actuators 304 are interconnected with the system 300 by way of an actuator interface 306, such as a bus, software interface, or the like. The actuators 304 include one or more of steering, throttle, brakes, transmission, implement actuators, hydraulic actuators, power take off, or the like for the conduct of one or more agricultural operations including, but not limited to, tilling, planting, cultivating, spraying, seeding, cutting, baling, harvesting, or the like including one or both of driving and implement operation.

Referring again to Figure 3A, an example autonomous operation controller 308 is provided. The controller 308 conducts the autonomous operation of the agricultural assembly (one or more of the vehicle 100 or implement 102), assesses the operability of one or more navigation devices, and correspondingly elects navigation devices to employ for autonomous driving and operation of the vehicle 100, implement 102, or both. In another example, the autonomous operation controller includes or receives one or more autonomous operation profiles. Each autonomous operation profile includes parameters (e.g., instructions) for operation in one or more of the field 104, transport to the field, transport from the field, including, but not limited to, driving, implement operation or the like. In an example, the autonomous operation profile includes, but is not limited to, a path plan; implement operating parameters (e.g., sprayer flow rate, sprayer prescriptions, cultivation depth, tillage depth, planting depth, planting spacing, or the like); vehicle operating parameters, such as speed range on road, speed range in field, specified end of row turn profile, crop row spacing (for ground engaging element positioning therebetween), or the like. In another example, the vehicle 100, implement 102, or both are operated by way of the actuators 304 (e.g., throttle, steering, transmission, brakes, implement actuators, or the like) to conduct an agricultural operation autonomously (including semi-autonomously) according to the autonomous operation profile, for instance with navigation provided by one or more of a first navigation device 310, second landmark navigation device 312, or gap navigation device 314.

A first navigation device 310 is shown in Figure 3A. In various examples the first navigation device 310 is one or more of navigation devices that provide navigation options for the agricultural vehicle 100. The first navigation device 310 includes, but is not limited to, GNSS navigation device, inertial measurement unit (IMU), RTK navigation or the like. Has operable and inoperable status. When inoperable the system 300 transitions to a second landmark navigation device 312. The labels, first, second, or the like, are a convention and do not connote a priority or importance.

The second navigation device 312 is also shown in Figure 3A. The second navigation device 312 includes a navigation device that conducts navigation (and permits autonomous operation) based on landmarks. Additionally the second navigation device 312, monitors features in and proximate to a field (collectively in the field), identifies features as landmarks (e.g., with a catalog of images and algorithm that assigns identity confidences, machine learning algorithms, artificial intelligence or the like), and indexes coordinates to the landmarks. In some examples, landmarking (identification of landmarks and indexing) is conducted while using another navigation device, such as GNSS, for instance an in situ process conducted during an agricultural operation, automated driving, or the like. GNSS navigation (or RTK or the like) is used to determine the position of the agricultural vehicle 100, and the position of the landmark is determined relative to the agricultural vehicle 100 position (e.g., through range and angle for instance with a stereo camera; x/y/z coordinates of the landmark relative to the ag vehicle, or the like).

In operation, and in one example, the first navigation device 310 is the initial navigation device and is operable. For example a threshold signal strength is detected, upload/download rates are within specifications, or the like. In this example, the location of the vehicle 100 is readily determined and compared with one or more of a field map, operation specifications (e.g., A-B lines, guidance path, crop rows, or the like). Deviation of the vehicle position relative to the operation specifications is determined, for instance with a comparator that determines one or more of cross track (lateral) error and heading (angle) error relative to a guidance path, crop row or the like. Autonomous control of the vehicle 100 drives the vehicle in a manner that decreases the deviation and thereby guides the vehicle 100 toward correspondence with operation specifications.

In a circumstance having the first navigation device 310 inoperable (e.g., because of cloud cover, tree canopy interruption, GNSS failure, or the like) the system 300 transitions to the second landmark navigation device 312. In another example, the first navigation device 310 is assessed inoperable because of a failure to meet one or more of threshold signal strength, threshold consistency (download/upload) or the like.

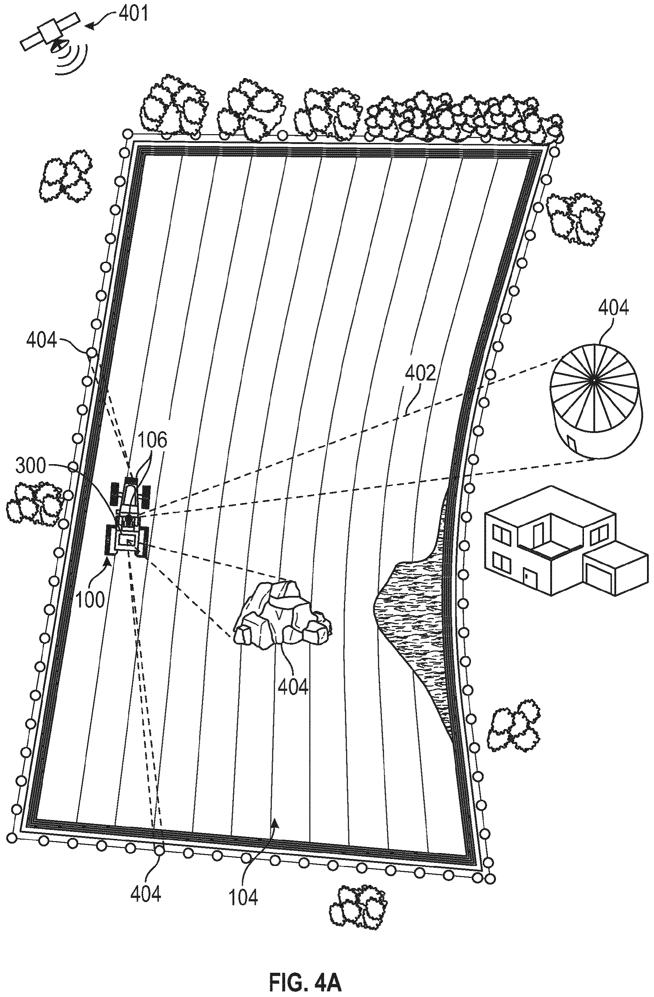

Upon determination the first navigation device 310 is inoperable the system 300 transitions to the second landmark navigation device 312. In one example, one or more of angle and distance to the landmarks from the vehicle 100 (e.g., with a stereo camera, range finder, or the like), IMU feedback, vision odometry, speed odometry are determined; and the indexed positions, such as x, y coordinates, of those landmarks are converted to a position of the vehicle 100 based on the angle and distance. In another example, the last position of the vehicle 300 with the first device 310 is employed as an initial position, and positions of one or more landmarks are determined and indexed (e.g., with sensor 106 range and angle information) based on the last GNSS position. The ongoing position of the vehicle 100 is thereafter determined from the indexed positions of the landmarks, and the positions of forthcoming landmarks are determined from the position of the vehicle 100 determined from present landmarks. Examples of signal based and landmark based navigation, and transitions therebetween, are illustrated in Figures 4A-D and described herein.

Optionally, upon determination the GNSS or other navigation signal or device 310 satisfies one or more thresholds the system 300 transitions the vehicle 100 from the second landmark based navigation device 312 to the first navigation device 310. In another example, the operator (remotely or onboard) toggles the second landmark based navigation device 312 to an inoperable status by toggling the first navigation device 310 to the operable status.

Figure 3B is a detailed view of an example of the second landmark navigation device 312 that conducts landmarking of features and landmark navigation, for instance operation of the agricultural vehicle (e.g., driving, implement operation or the like) based on observed landmarks. As shown the landmark navigation device 312 is interconnected with sensors 106, such as a GNSS sensor, and sensors 106 including one or more observation sensors (e.g., one or more of camera, video camera, stereocamera, LIDAR, radar, ultrasound, or the like).

In a first example, the second landmark navigation device 312 optionally includes a landmarking module 320 of circuits, computer readable media, instructions for operating a processor or the like and one or more processors that detect, identify, and index features observed with the sensors 106 and classify those features as landmarks usable for landmark based navigation. An identification module 322 receives input from the observation sensors 106 and detects features in the field from the input. The detected features are compared with a catalog of images (e.g., trees, bodies of water, fence posts, structures, or the like) and an algorithm assigns identity confidences to the detected features. Optionally, the comparison is conducted with a perception module 350 having the catalog and one or more comparators to facilitate identification. Identity confidences above a threshold (e.g., 70, 80, 90 percent or the like) initiate identification of the feature as a landmark. In other examples, the identification module 322 employs a perception system 350 including one or more of machine learning algorithms, artificial intelligence (AI) interfaces, or the like to identify features as landmarks.

An indexing module 324 is provided with the landmarking module 320. Identified landmarks are indexed with coordinates. For instance, in one example, an initial vehicle position having x, y coordinates (e.g., determined with GNSS) is employed as a base position, and range and angle relative to the vehicle 100 are determined with the observation sensors 106. Coordinates of the landmark are determined based on the position of the landmark relative to the initial vehicle position. The determined coordinates are indexed to the landmark, and a cataloging module 324 stores the identified landmark and its coordinates for landmark based navigation. The cataloging module 324 conducts maintenance, storage or the like of the landmarks (e.g., identification, for instance as a fence post, tree variety, silo, brush variety, silo, shed, or the like), associated indexed position (e.g., coordinates), images for comparison to a memory, database, table, map, chart, or the like.

The detection, identification, indexing, and cataloging are, in one example, conducted in situ to an ongoing operation of the vehicle 100, implement 102, or the like. For example, as the vehicle 100 and implement 102 are conducting an operation and employing the first navigation device 310 (e.g., GNSS based navigation) features in the field (including proximate the field) are readily detected, identified, labeled as landmarks, indexed with coordinates, and catalogued. Accordingly, upon inoperability of the first navigation device 310 a catalog of indexed and identified landmarks are available for landmark based navigation with the second landmark navigation device 312.

The landmark navigation device 312 includes a landmark navigation module 340. The module 340 includes circuits, memory having instructions, associated processors or the like that conduct landmark based navigation of a vehicle, such as the vehicle 100. For instance, the landmark navigation module 340 conducts observation of features at 360. In one example, observations of the sensors 106 are provided to the perception system 350 having a comparator and catalog of reference images and coordinates. Optionally, the perception system 350 includes a machine learning interface, AI algorithms, or the like (e.g., 352). The perception system 350 with one or more of these capabilities identifies features in the sensor 106 observations as landmarks.

At 362 the observations of the sensors 106 with the identified landmarks are compared with catalogued landmarks, for instance the catalog 326 shown in Figure 3B. The module 340 includes a comparator, machine learning interface, AI algorithm or the like (e.g., potentially employing module 352) that compares the presently identified landmarks with catalogued landmarks. Correspondence of the presently identified landmarks (e.g., 70, 80, 90 percent confidence or the like) with catalogued landmarks initiates an association of the presently identified and catalogued landmarks. For instance, the presently identified landmarks is identified as corresponding to the catalogued landmark. Accordingly, the indexed location of the catalogued landmark is also the indexed location of the same presently identified landmark.

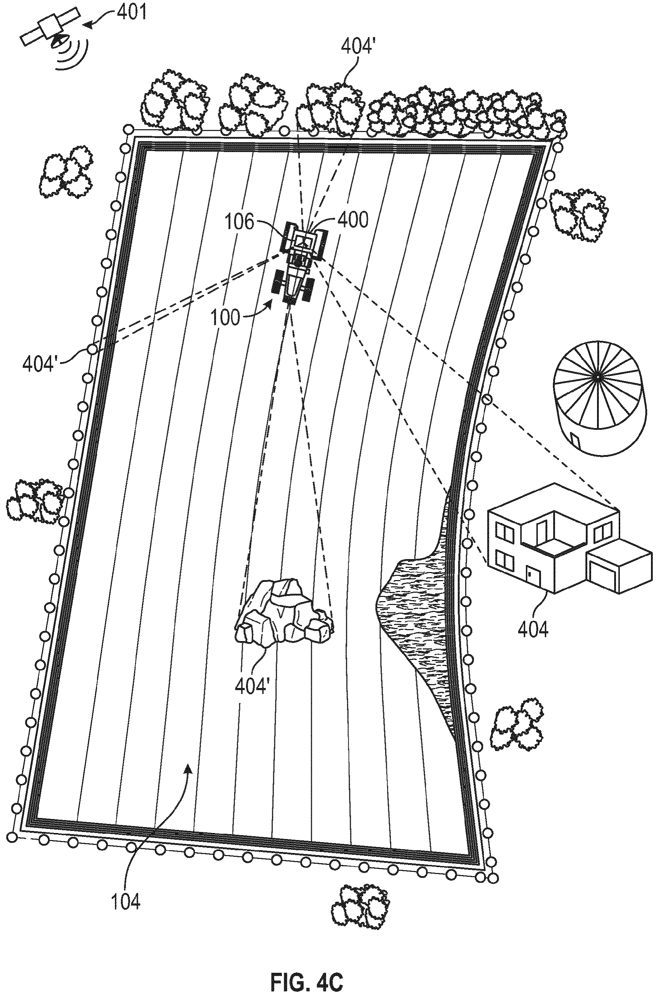

At 366, with the association (e.g., identity) between the presently identified and catalogued landmarks, vehicle kinematics are determined relative to the associated landmark. Vehicle kinematics include, but are not limited to, position, heading, velocity, acceleration, pitch, yaw, roll, or the like of the vehicle 100, implement 102, both, or the like. For example, the observation sensors 106 conduct range and angle determination relative to the indexed landmark, for instance by way of a stereocamera, LiDAR, radar, IMU, or the like. With the catalogued position of the landmark one or more of the vehicle 100 or implement 102 position (e.g., x/y/z coordinates, longitude and latitude, or the like) are readily determined relative to the landmark. With multiple identified landmarks associated with corresponding catalogued landmarks the position determination is further refined and has an enhanced resolution. See Figure 4C for an example of landmark based navigation with multiple landmarks. Optionally, the determined position of the vehicle 100 relative to the landmark is converted to a GNSS type three-dimensional location and stored in (e.g., indexed to) an as-applied map, function map, or the like. In another example, the determined position, such as the GNSS type three-dimensional location, is sent through cellular network, by radio, or the like for logistic logging. For instance, the system 300 behaves in an opposite manner to a GNSS receiver providing its own determined vehicle position in the manner of a GNSS type three-dimensional location.

As position changes, and is updated based on observations with the sensors 106, one or more rates of change are determined, including but not limited to, velocity, acceleration or the like. Additionally, pitch, yaw, roll, rates of change of the same or the like are similarly determined based on comparison of catalogued landmark orientation relative to the observed orientation of the presently identified landmark. In still other examples, the maintenance of one or more landmarks during landmark based navigation facilitates the determination of orientation (heading, pitch, yaw, roll, or the like) of the vehicle 100, implement 102, or the assembly of both based on change of angular position between observations conducted with the sensors 106 at first and second times.

In another example, at 366, with the association (e.g., identity) between the presently identified and catalogued landmarks, the catalogued landmark position is determined from a known position of the vehicle 100. In this example, the catalogued landmark is identified and stored without indexed coordinates, or the indexed coordinates are assessed as stale (stored at a previous time greater than a time threshold) or faulty (e.g., corrupted, incongruous to the field, operator overrides use of the coordinates). In this example, the vehicle 100 is previously driven according to the first navigation device, such as a GNSS based navigation. The initial position of the vehicle is known for instance as a global coordinate position supplied with an interpreted GNSS signal. Upon (or within 1 to 5 seconds before or after) toggling to the second landmark based navigation device 312 the global coordinate position of the vehicle 100 is used along with one or more of range or angle to the presently identified landmark, now associated with a catalogued landmark, to determine coordinates of the landmark. For instance, with the global coordinate position of the vehicle 100, range to the landmark, and angle toward the landmark (e.g., relative to a present heading of the vehicle) a global coordinate position of the landmark is readily determined. The global coordinate position is then indexed to the presently identified and associated (with a catalogued landmark) landmark. Thereafter the landmark serves as a reference location for use with the landmark navigation device 312. As the vehicle 100 continues to change its position (e.g., range and angle) relative to the landmark is determined. For example, given the previously indexed location of the landmark the global coordinates of the vehicle 100 are determined based on the range and angle of the vehicle from the landmark observed with the sensors 106.

At 368, the landmark navigation module 340 calibrates the vehicle 100 (implement 102 or both) position according to the determined vehicle kinematics. The vehicle kinematics are updated in an ongoing fashion with updated observations conducted with the sensors 106 with the observations processed as noted in 360-368.

In another example, the determined position of the vehicle 100 relative to the presently identified and associated landmark coordinates permits the determination of global coordinates (e.g., longitude and latitude) of the vehicle 100. The agricultural vehicle position (and optionally other kinematic characteristics) is accordingly calibrated to the landmark as the point of reference to permit global identification of the vehicle 102 kinematics (and optionally an associated implement 102). The process is repeated to update the position of the vehicle 100 (relative to the landmark, and then globally) while operating in the field. Navigation of the vehicle 100, for instance to follow a path plan, prescriptions or the like is thereby conducted while a GNSS signal or other navigation devices are unavailable. Further, as (first) landmarks go out of view forthcoming (second) landmarks are observed, identified as previously catalogued landmarks, and the landmark navigation device is recalibrated to permit operation of the ag vehicle 100 relative to the (second) landmarks. Optionally, intermediate or gap navigation is conducted if a landmark is not observed with the sensors 106 and a GNSS or RTK navigation device 310 are inoperable, for instance navigation with an IMU, stereo camera, odometry (vehicle or tire/wheel) or the like. For instance, see gap navigation device 314 in Figure 3A. Upon return of a GNSS signal navigation returns to the first navigation device, or if another landmark is observed and associated with a catalogued landmark, landmark navigation with the second landmark navigation device 312 is conducted.

In one example, landmark based navigation with the device 312 is conducted with the vehicle 100, implement 102, or both. For instance, a second form of navigation is not employed. In another example, landmark based navigation with the device 312 is conducted with another form of navigation, such as GNSS, RTK, IMU navigation or the like. Optionally, as these navigation devices 310 are inoperable the landmark based navigation device 312 is toggled operable and permits continued operation of the vehicle 100, implement 102, or both in a seamless manner without interruptions otherwise caused by loss of GNSS signal or the like. Conversely, as the navigation device 310 is assessed operable (e.g., GNSS signal strength achieves a threshold valve) the landmark based navigation device 312 is toggled inoperable while the navigation device (e.g., GNSS) is toggled operable.

Figure 4A is a first schematic view of a field 104 having the agricultural vehicle 100 conducting an agricultural operation. In this example, the agricultural vehicle is conducting agricultural operation (driving, implement operation, or both) with a first navigation device 310, such as a GNSS, RTK signal based format. Stated another way, the first navigation device 310 is 'operable'. For example, a GNSS signal is received with an onboard antenna, and the signal meets one or more strength and consistency thresholds (e.g., -90 dBm or greater, -60 dBm or greater or the like) to permit autonomous operation of the agricultural vehicle (e.g., one or more of driving or conducting an agricultural operation).

Referring again to Figure 4A, positioning satellite 401 provides an example of a first navigation device transmitter (e.g., GNSS). In Figure 4A the agricultural vehicle 100 first navigation device 310 receives the signal and permits autonomous signal based operation (e.g., driving, implement operation, or the like) of the vehicle 100, implement 102, or both.

As described herein, operability of the first navigation device 310 facilitates the indexing of coordinates to identified landmarks. For instance, while the first navigation device (GNSS) is available the identified landmarks are readily indexed with coordinates through stereo camera position determination (sensors 106) relative to the known GNSS position of the vehicle. These landmarks having respective coordinates are catalogued (e.g., in a landmark database, catalog, or the like) as catalogued landmarks for use by the second landmark navigation device 312.

As shown in Figure 4A, the sensors 106 conduct one or more scans from the vehicle 100 (implement 102, or both). For example, sensor monitoring 402 (shown with dashed lines) of one or more features in the field (including proximate to the field) are conducted with a stereo camera. The stereo camera, as one or more sensors 106, conducts one or more of focused or broad scans around the vehicle 100. The associated autonomous operation controller, perception system or the like (e.g., identification module 322, perception system 350, or the like) identifies the features from the scans as landmarks, as described herein.

Various example landmarks 404 are shown in Figure 4A. A first example includes a fence post feature. The fence post feature is identified as a landmark 404 as discussed herein, for instance according to the function of the landmarking module 320. The sensors 106 in combination with the second landmark navigation device 312 determine distance and angle or coordinates relative to the agricultural vehicle 100 (e.g., GNSS, RTK, cartesian, or global coordinates) to permit the determination of coordinates for the landmark. For instance, in a global coordinate system like that used for GNSS navigation (e.g., latitude and longitude, xyz coordinates or the like). The determined global coordinates are indexed to the landmark 404, such as a virtual item or catalog entry (e.g., fence post A9) corresponding to the landmark 404 maintained by the second landmark navigation device 312 in a catalog of landmarks 326 in Figure 3B.

In another example, a feature includes a silo feature proximate to the field 104 in this example. The silo is identified as a landmark 404 as discussed herein. In one example the distance and angle or coordinates relative to the agricultural vehicle 100 permit the determination of coordinates for the landmark. The vehicle 100 has global coordinates from GNSS navigation (e.g., latitude and longitude, xyz or the like). Relative coordinates are determined to the silo landmark (e.g., based on range and angle relative to the known position of the vehicle). Global coordinates, such as xyz, longitude and latitude, or the like are indexed to the landmark 404, for instance a virtual item corresponding to the landmark 404 maintained by the second landmark navigation device in a catalog such as catalog of landmarks 326 in Figure 3B.

Another example rock feature in the field 104 is identified as a landmark 404 as described herein. For instance, the distance and angle or coordinates relative to the agricultural vehicle 100 permit the determination of coordinates for the landmark 404. For instance, in a global coordinate system like that used for GNSS navigation (e.g., latitude and longitude, xyz or the like) the coordinates of the agricultural vehicle 100, subject to first navigation device navigation in Figure 4A, are known. The coordinates of the landmark are determined based on the known position of the vehicle 100 and are indexed to the landmark 404. For instance, a virtual item corresponding to the landmark 404 maintained in a catalog of landmarks 326 is indexed with the determined coordinates.

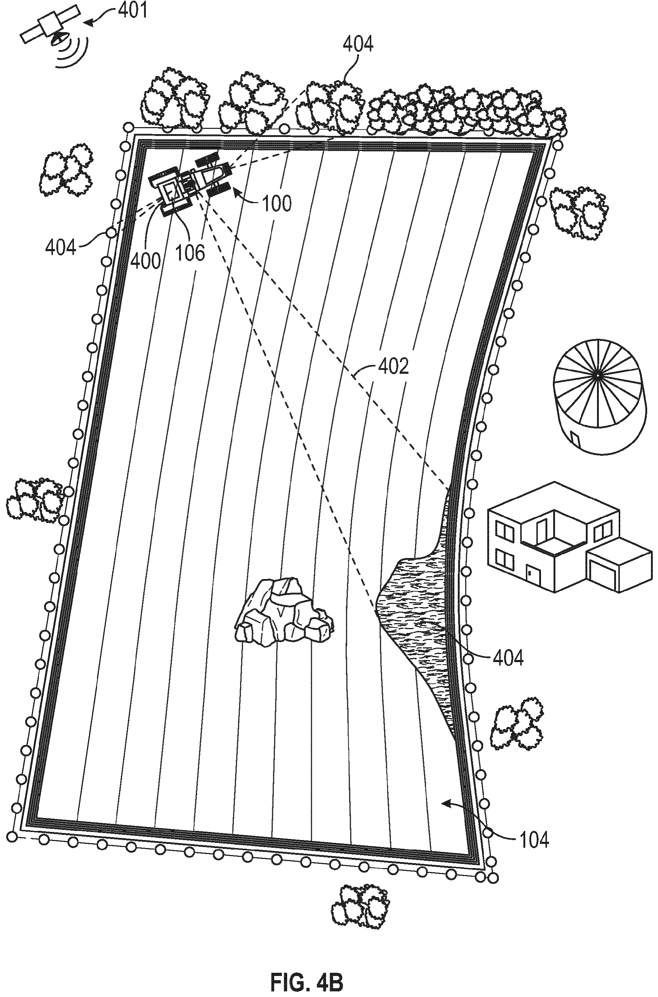

Figure 4B shows another view of the field 104 with the agricultural vehicle 100 conducting the agricultural operation and in a different portion of the field. In this example, the second navigation device 312 operates in situ and in the background relative to the operable first navigation device 310, such as a GNSS based navigation system, to identify and catalog (and optionally determine locations of) landmarks in the field 104 for use with the second navigation device 312 (presently inoperable but running). Landmarks 404 are identified, catalogued, and accumulate with the catalog of landmarks 326 (Figure 3B) for use with the second navigation device 312 when operable.

In the examples in Figure 4B the features include additional fence posts, trees, body of water, or the like. As shown, the sensors 106 conduct observations 402 and the second navigation device, such as the landmarking module 320, identifies the features as landmarks and catalogs the identified landmarks, for instance in a landmark catalog 326.

Figure 4C shows the vehicle 100 conducting the agricultural operation in the field 104. In this example, the first navigation device 310 is designated inoperable (e.g., inactive) and second landmark based navigation device 312 is designated operable (e.g., actively employed to conduct navigation of the vehicle 100). For example, the GNSS signal fails to meet one or more strength and consistency thresholds (e.g., -90 dBm or greater, -60 dBm or greater or the like) that permits consistent autonomous operation of the agricultural vehicle (e.g., one or more of driving or conducting an agricultural operation) with the first navigation device 310. The autonomous agricultural vehicle control system 300 seamlessly transitions to the second navigation device 312 and conducts navigation based on the catalogued landmarks 404.

Optionally, with the second navigation device 312 operable landmarking of additional features as landmarks is continued. For instance, the sensors 106, in addition to tracking catalogued landmarks, continue to identify features in the field as landmarks and continue to catalog those landmarks. In one example, the newly identified landmarks are indexed with coordinates, for instance by determining a relative position between previously catalogued landmarks and newly identified landmarks. In another example, the newly identified landmarks are indexed with coordinates by determining the agricultural vehicle 100 position relative to previously catalogued landmarks 404. The position coordinates of the newly identified landmark then determined relative to the determined agricultural vehicle position.

In the example shown in Figure 4C, landmarks designated as 404' are previously catalogued and available for landmark based navigation with the second landmark navigation device 312 as described herein. For instance, each of the tree, fence post, and rock are catalogued landmarks 404' and are employed by the second landmark navigation device 312 as landmarks to conduct navigation of the vehicle 100. Further, landmarks designated as 404 (without the ' notation) are newly identified landmarks. For instance, in Figure 4C a barn is identified with the sensors 106 and landmarking module 320. Once catalogued, for instance in the catalog 326, the landmark 404 (e.g., the barn) is ready for use with by the second navigation device 312 for navigation of the vehicle 100.

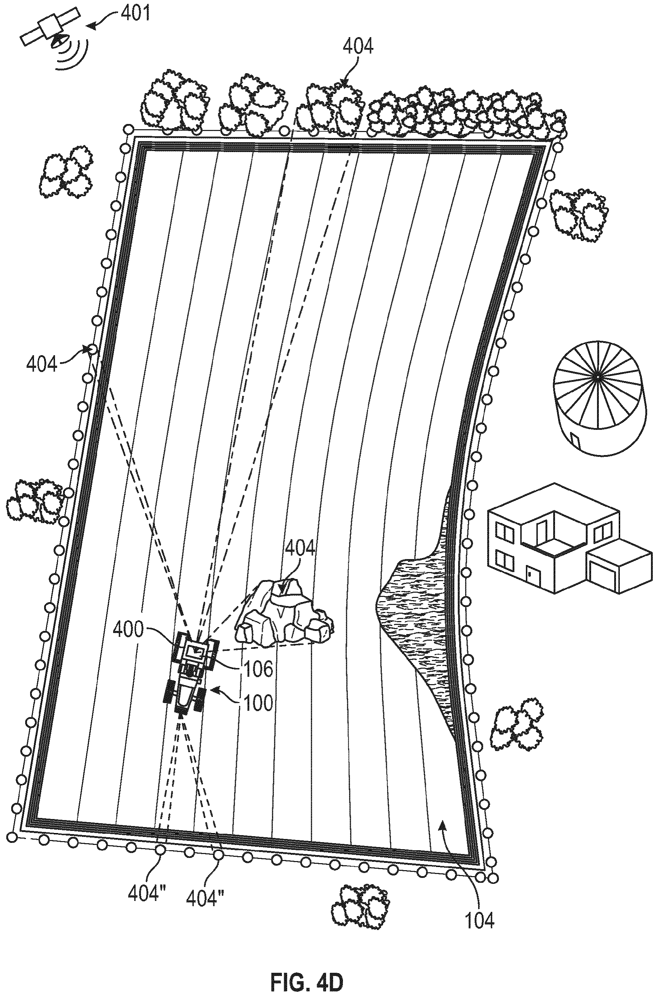

Figure 4D illustrates another permutation of the agricultural operation with the vehicle 100 in the field 104. In this example the agricultural vehicle 100 is navigated with the second navigational device 312 and is transitioning landmark navigation from the receding landmarks 404 to the forthcoming landmarks 404". In an example, as the vehicle 100 moves through the field one or more of the catalogued landmarks 404 come into and out of view of the sensors 106. Previously landmarks 404 (also referred to as receding landmarks) are going out of view or are about to go out of view including, but not limited to, out of range or out of the scanning arc of a sensor 106. For instance, the observation of the landmarks 404 have a decreased confidence, such as a confidence of identification less than 70, 60, 50 percent or the like. In this circumstance, the second landmark navigation device 312 'handsoff' navigation from the one or more first landmarks 404 to one or more second landmarks 404" to continue navigation by way of the second navigation device 312.

Optionally, if the one or more second landmarks 404" are not observed with the sensors 106 as the first landmarks 404 go out of view, intermediate navigation (or gap navigation) is conducted with one or more of an inertial measurement unit (IMU), stereo camera, vehicle odometry, wheel odometry or the like until a higher priority navigation device (e.g., the first or second landmarking devices 310, 312) are available. For example, the first navigation device 310 is designated operable and is active for navigation with an available GNSS signal. In another example, the second navigation device is designated operable with a catalogued landmark (e.g., 404") observed with the sensors 106 and identified with the second landmarking navigation device 312. Accordingly, continued autonomous operation of the agricultural vehicle 100 is maintained even with one or more navigation devices 310, 312 inoperable.

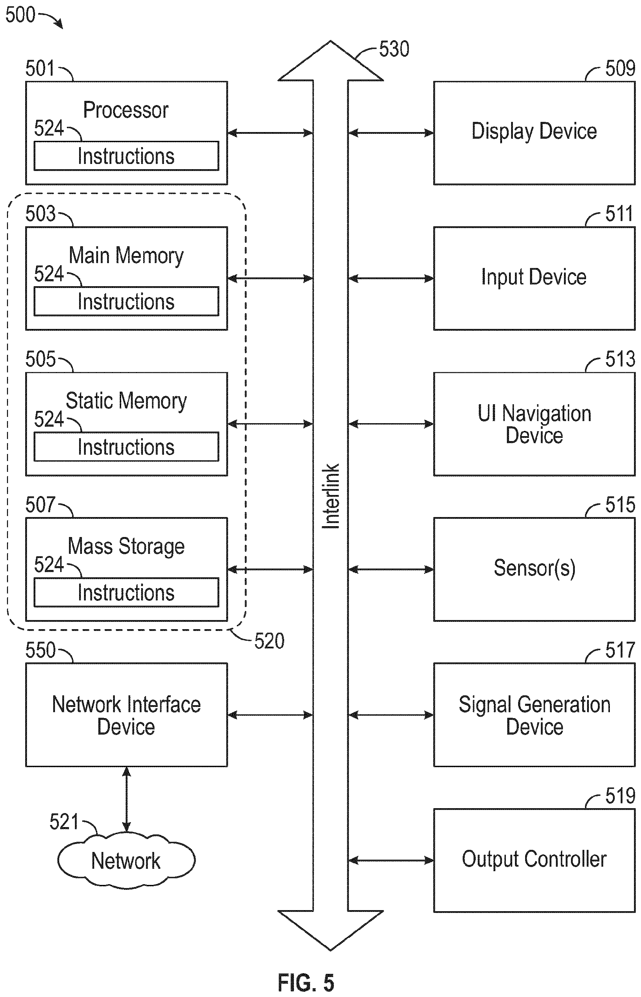

The techniques shown and described in this document are performed in various examples using a portion or an entirety of an autonomous vehicle control system, such as the autonomous agricultural vehicle control system 300 shown in Figure 3; agricultural vehicles 100, implements 102; or the like as described herein or otherwise using a machine 500 as discussed below in relation to Figure 5. Figure 5 illustrates a block diagram of an example comprising a machine 500 upon which any one or more of the techniques (e.g., methodologies) discussed herein is performed. In various examples, the machine 500 operates as a standalone device or is connected (e.g., networked) to other machines.

In a networked deployment, the machine 550 operates in the capacity of a server machine, a client machine, or both in server-client network environments. In an example, the machine 500 acts as a peer machine in peer-to-peer (P2P) (or other distributed) network environments. The machine 500 is optionally a personal computer (PC), a tablet device, a set-top box (STB), a personal digital assistant (PDA), a mobile telephone, a web appliance, a network router, switch or bridge, field computer, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate by, logic or a number of components, or mechanisms. Circuitry is a collection of circuits implemented in tangible entities that include hardware (e.g., simple circuits, gates, logic, etc.). Circuitry membership is flexible over time and underlying hardware variability. Circuitries include members that, alone or in combination, perform specified operations when operating. In an example, hardware of the circuitry is immutably designed to carry out a specific operation (e.g., hardwired). In another example, the hardware comprising the circuitry includes variably connected physical components (e.g., execution units, transistors, simple circuits, or the like) including a computer-readable medium physically modified (e.g., magnetically, electrically, such as via a change in physical state or transformation of another physical characteristic, or the like) to encode instructions of the specific operation. In connecting the physical components, the underlying electrical properties of a hardware constituent are changed, for example, from an insulating characteristic to a conductive characteristic or vice versa. The instructions enable embedded hardware (e.g., the execution units or a loading mechanism) to create members of the circuitry in hardware via the variable connections to carry out portions of the specific operation when in operation. Accordingly, the computer-readable medium is communicatively coupled to the other components of the circuitry when the device is operating. In an example, any of the physical components are used in more than one member of more than one circuitry. For example, under operation, execution units may be used in a first circuit of a first circuitry at one point in time and reused by a second circuit in the first circuitry, or by a third circuit in a second circuitry at a different time.

The machine 500 (e.g., computer system) may include a hardware-based processor 501 (e.g., a central processing unit (CPU), a graphics processing unit (GPU), a hardware processor core, or any combination or plurality thereof), a main memory 503 and a static memory 505, some or all of which may communicate with each other via an interlink 530 (e.g., a bus, CAN bus or the like). The machine 500 may further include one or more of a display device 509, an input device 511 (e.g., an alphanumeric keyboard), or a user interface (UI) navigation device 513 (e.g., a mouse, track pad, track ball, stylus, joystick or the like). In an example, the display device 509, the input device 511, and the UI navigation device 513 comprise at least portions of a touch screen display. The machine 500 may additionally include a mass storage device 507 (e.g., a drive unit), a signal generation device 517 (e.g., a speaker, light system, or the like), a network interface device 550, and one or more sensors 515, such as the sensors described herein for one or both of the vehicles 100 or implements 102 d. For instance, example sensors 515 (106 in Figures 1A-4D) include, but are not limited to, sensors for monitoring one or more features in a field, including proximate to a field, (e.g., trees, brush, fences, fence posts, ditches, culverts, rocks, structures, vehicles, bodies of water, or the like). Additionally the sensors 515 facilitate observation of landmarks and determination of one or more kinematics (such as position) of landmarks 404, vehicle 100, implement, or the like. In still other examples, the sensors 106 include sensors, devices (such as transceivers), or the like that facilitate signal based navigation including, but not limited to GNSS, RTK, or the like.

In another example, the machine 500 includes one or more actuators 304, such as the actuators described herein for one or both of the vehicle 100, implement 102, or the like. The machine 500 includes, in an example, an output controller 519 (an example of an actuator interface 306, see Figure 3A), such as a serial controller or interface (e.g., a universal serial bus (USB)), a parallel controller or interface, or other wired or wireless (e.g., infrared (IR) controllers or interfaces, near field communication (NFC), etc., coupled to communicate or control one or more actuators 304.

The storage devices 503, 505, 507 include, but are not limited to, a machine readable medium on which is stored one or more sets of data structures or instructions 524 (e.g., software or firmware) embodying or utilized by any one or more of the techniques or functions described herein including, but not limited to, the autonomous agricultural vehicle control system 300, first navigation device 310, second navigation device 312, gap navigation device (e.g., IMU, stereo camera, vehicle odometry, wheel odometry) or the like. The instructions 524 may also reside, completely or at least partially, within a main memory 503, within a static memory 505, within a mass storage device 507, or within the hardware-based processor 501 (including processors) during execution thereof by the machine 500. In an example, one or any combination of the hardware-based processor 501, the main memory 503, the static memory 505, or the mass storage 507 may constitute machine readable media. In another example, one or more of the memories 503, 505, 507 retain the one or more algorithms, value look up tables, value databases, landmark images for comparison to sensor 106 observations, AI interface or algorithm, machine learning interface or algorithm, landmark catalog, URLs, macros, or the like associated with the application system 500.

While the machine readable medium is in one example considered as a single medium, the term "machine readable medium" may include a single medium or multiple media (e.g., a centralized or distributed database, and/or associated caches and servers) configured to store the one or more instructions 524.

The term "machine readable medium" may include any medium that is capable of storing, encoding, or carrying instructions for execution by the machine 500 and that cause the machine 500 to perform any one or more of the techniques of the present disclosure, or that is capable of storing, encoding or carrying data structures used by or associated with such instructions. Non-limiting machine-readable medium examples may include solid-state memories, and optical and magnetic media. Accordingly, machine-readable media are not transitory propagating signals. Specific examples of massed machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic or other phase-change or state-change memory circuits; magnetic disks, such as internal hard disks and removable disks; magneto-optical disks; and CD-ROM and DVD-ROM disks.

The instructions 524 may further be transmitted or received over a communications network 521 using a transmission medium via the network interface device 550 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., the Institute of Electrical and Electronics Engineers (IEEE) 802.22 family of standards known as Wi-Fi^{®}, the IEEE 802.26 family of standards known as WiMax^{®}), the IEEE 802.27.4 family of standards, peer-to-peer (P2P) networks, among others. In an example, the network interface device 550 may include one or more physical jacks (e.g., Ethernet, coaxial, or phone jacks) or one or more antennas to connect to the communications network 521. In an example, the network interface device 550 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 500, and includes digital or analog communications signals or other intangible medium to facilitate communication of such software.

### Various Notes

Aspect 1 can include subject matter such as a landmarking navigation system comprising: one or more sensors configured to observe one or more features in a field or proximate to a field, the one or more sensors configured for installation with an agricultural vehicle; one or more processors in communication with the one or more sensors, the one or more processors configured to: landmark the one or more features, landmarking includes: identifying the one or more features as one or more landmarks, respectively; indexing coordinates to the one or more landmarks indicative of positions of the one or more landmarks; and cataloging the one or more landmarks with indexed coordinates as one or more catalogued landmarks; and landmark navigate the agricultural vehicle, landmark navigating includes: observing the one or more features in the field with the one or more sensors; comparing the observations of the one or more features with the one or more catalogued landmarks; identifying the one or more features as the one or more catalogued landmarks, respectively; and determining vehicle kinematics of the agricultural vehicle relative to the one or more catalogued landmarks.

Aspect 2 can include, or can optionally be combined with the subject matter of Aspect 1, to optionally include wherein determining vehicle kinematics of the agricultural vehicle relative to the one or more catalogued landmarks includes determining one or more of position, heading, vector, speed, acceleration, pitch, yaw or roll of the agricultural vehicle.

Aspect 3 can include, or can optionally be combined with the subject matter of one or any combination of Aspects 1 or 2 to optionally include wherein the agricultural vehicle includes one or more of a prime mover or an agricultural implement.

Aspect 4 can include, or can optionally be combined with the subject matter of one or any combination of Aspects 1-3 to optionally include the agricultural vehicle.

Aspect 5 can include, or can optionally be combined with the subject matter of one or any combination of Aspects 1-4 to optionally include wherein the one or more sensors include one or more of a camera, video camera, stereo camera, radar, light detection and ranging (LIDAR) sensor, or ultrasound sensor.

Aspect 6 can include, or can optionally be combined with the subject matter of Aspects 1-5 to optionally include wherein identifying the one or more features as one or more landmarks, respectively, includes analyzing the one or more features with one or more of a machine learning algorithm or artificial intelligence technique.

Aspect 7 can include, or can optionally be combined with the subject matter of Aspects 1-6 to optionally include wherein indexing coordinates to the one or more landmarks includes indexing global coordinates to the one or more landmarks.

Aspect 8 can include, or can optionally be combined with the subject matter of Aspects 1-7 to optionally include wherein the global coordinates include latitude and longitude.

Aspect 9 can include, or can optionally be combined with the subject matter of Aspects 1-8 to optionally include wherein indexing coordinates to the one or more landmarks includes: determining a global navigation satellite system (GNSS) position of the agricultural vehicle; and determining the coordinates of the one or more landmarks relative to the GNSS position of the agricultural vehicle.

Aspect 10 can include, or can optionally be combined with the subject matter of Aspects 1-9 to optionally include wherein determining the coordinates of the one or more landmarks includes determining the coordinates of the one or more landmarks relative to the GNSS position of the agricultural vehicle based on the position and orientation of the one or more sensors.

Aspect 11 can include, or can optionally be combined with the subject matter of Aspects 1-10 to optionally include wherein the one or more sensors includes at least one stereo camera; and indexing coordinates to the one or more landmarks includes determining the coordinates of the one or more landmarks relative to the position of the agricultural vehicle with the at least one stereo camera.

Aspect 12 can include, or can optionally be combined with the subject matter of Aspects 1-11 to optionally include wherein the one or more sensors includes at least one stereo camera; and determining the vehicle kinematics of the agricultural vehicle includes determining the coordinates of the agricultural vehicle relative to the one or more catalogued landmarks with the at least one stereo camera.

Aspect 13 can include, or can optionally be combined with the subject matter of Aspects 1-12 to optionally include wherein comparing the observations of the one or more features with the one or more catalogued landmarks includes analyzing the one or more observations with one or more of a machine learning algorithm or artificial intelligence technique.

Aspect 14 can include, or can optionally be combined with the subject matter of Aspects 1-13 to optionally include wherein determining the vehicle kinematics of the agricultural vehicle includes determining the vehicle kinematics according to deviations between the observations of the one or more features with the one or more catalogued landmarks, respectively.

Aspect 15 can include, or can optionally be combined with the subject matter of Aspects 1-14 to optionally include wherein the deviations include one or more of a size deviation or an orientation deviation.

Aspect 16 can include, or can optionally be combined with the subject matter of Aspects 1-15 to optionally include the one or more features include at least a first feature and a second feature and the one or more catalogued landmarks include at least a first catalogued landmark and a second catalogued landmark, wherein landmark navigating includes: designating the first feature as the first catalogued landmark and determining the vehicle kinematics of the agricultural vehicle includes determining the vehicle kinematics relative to the first catalogued landmark; designating the second feature as the second catalogued landmark and determining the vehicle kinematics of the agricultural vehicle includes determining the vehicle kinematics relative to the second catalogued landmark instead of the first catalogued landmark.

Aspect 17 can include, or can optionally be combined with the subject matter of Aspects 1-16 to optionally include wherein observing the one or more features includes observing at least the first and second features; and designating the second feature as the second catalogued landmark is conducted as observing the first feature is ending.

Aspect 18 can include, or can optionally be combined with the subject matter of Aspects 1-17 to optionally include wherein the one or more processors are configured to calibrate the determining of vehicle kinematics of the agricultural vehicle with the one or more catalogued landmarks.

Aspect 19 can include, or can optionally be combined with the subject matter of Aspects 1-18 to optionally include an autonomous agricultural vehicle control system comprising: one or more sensors configured to observe one or more features in a field or proximate to a field, the one or more sensors configured for installation with an agricultural vehicle; an actuator interface configured for communication with one or more actuators of the agricultural vehicle: one or more processors in communication with the one or more sensors and the actuator interface, the one or more processors include: a first navigation device configured to determine a position of the agricultural vehicle; a second landmark navigation device configured to: identify the one or more features as one or more landmarks, respectively; and index coordinates to the one or more landmarks indicative of positions of the one or more landmarks; an autonomous operation controller configured to: receive an autonomous operation profile that includes instructions for operating in the field; assess the first navigation device as: operable and electing the first navigation device, or inoperable and electing the second landmark navigation device; and operating the agricultural vehicle with the one or more actuators according to the autonomous operation profile and one of the first navigation device or the second landmark navigation device according to the operable or inoperable assessment of the first navigation device.

Aspect 20 can include, or can optionally be combined with the subject matter of Aspects 1-19 to optionally include wherein the one or more processors are configured to calibrate one or more of the first or second landmark navigation devices with the landmarks and indexed coordinates.

Aspect 21 can include, or can optionally be combined with the subject matter of Aspects 1-20 to optionally include wherein the instructions for operating in the field include one or more of autonomous driving instructions or autonomous implement operating instructions.

Aspect 22 can include, or can optionally be combined with the subject matter of Aspects 1-21 to optionally include wherein operating the agricultural vehicle includes determining vehicle kinematics of the agricultural vehicle relative to the indexed coordinates of the one or more landmarks.

Aspect 23 can include, or can optionally be combined with the subject matter of Aspects 1-22 to optionally include the agricultural vehicle.

Aspect 24 can include, or can optionally be combined with the subject matter of Aspects 1-23 to optionally include wherein the one or more sensors include one or more of a camera, video camera, stereo camera, radar, light detection and ranging (LIDAR) sensor, or ultrasound sensor.

Aspect 25 can include, or can optionally be combined with the subject matter of Aspects 1-24 to optionally include wherein identifying the one or more features as one or more landmarks, respectively, includes analyzing the one or more features with one or more of a machine learning algorithm or artificial intelligence technique.

Aspect 26 can include, or can optionally be combined with the subject matter of Aspects 1-25 to optionally include wherein indexing coordinates to the one or more landmarks includes indexing global coordinates to the one or more landmarks.

Aspect 27 can include, or can optionally be combined with the subject matter of Aspects 1-26 to optionally include wherein the global coordinates include latitude and longitude.

Aspect 28 can include, or can optionally be combined with the subject matter of Aspects 1-27 to optionally include wherein indexing coordinates to the one or more landmarks includes: determining a global navigation satellite system (GNSS) position of the agricultural vehicle; and determining the coordinates of the one or more landmarks relative to the GNSS position of the agricultural vehicle.

Aspect 29 can include, or can optionally be combined with the subject matter of Aspects 1-28 to optionally include wherein determining the coordinates of the one or more landmarks includes determining the coordinates of the one or more landmarks relative to the GNSS position of the agricultural vehicle based on the position and orientation of the one or more sensors.

Aspect 30 can include, or can optionally be combined with the subject matter of Aspects 1-29 to optionally include wherein the one or more sensors includes at least one stereo camera; and indexing coordinates to the one or more landmarks includes determining the coordinates of the one or more landmarks relative to the position of the agricultural vehicle with the at least one stereo camera.

Aspect 31 can include, or can optionally be combined with the subject matter of Aspects 1-30 to optionally include wherein the one or more sensors includes at least one stereo camera; and operating the agricultural vehicle according to the autonomous operation profile includes determining the coordinates of the agricultural vehicle relative to the one or more catalogued landmarks with the at least one stereo camera.

Aspect 32 can include, or can optionally be combined with the subject matter of Aspects 1-31 to optionally include wherein the one or more features include at least a first feature and a second feature and the one or more landmarks include at least a first catalogued landmark and a second catalogued landmark, wherein landmark navigating includes: designating the first feature as the first catalogued landmark and operating the agricultural vehicle includes determining the vehicle kinematics relative to the first catalogued landmark; designating the second feature as the second catalogued landmark and operating the agricultural vehicle includes determining the vehicle kinematics relative to the second catalogued landmark instead of the first catalogued landmark.

Aspect 33 can include, or can optionally be combined with the subject matter of Aspects 1-32 to optionally include wherein designating the second feature as the second catalogued landmark is conducted as observation of the first feature is lost by the one or more sensors.

Each of these non-limiting aspects can stand on its own, or can be combined in various permutations or combinations with one or more of the other aspects.

The above description includes references to the accompanying drawings, which form a part of the detailed description. The drawings show, by way of illustration, specific embodiments in which the invention can be practiced. These embodiments are also referred to herein as "aspects" or "examples." Such aspects or example can include elements in addition to those shown or described. However, the present inventors also contemplate aspects or examples in which only those elements shown or described are provided. Moreover, the present inventors also contemplate aspects or examples using any combination or permutation of those elements shown or described (or one or more features thereof), either with respect to a particular aspects or examples (or one or more features thereof), or with respect to other Aspects (or one or more features thereof) shown or described herein.

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Geometric terms, such as "parallel", "perpendicular", "round", or "square", are not intended to require absolute mathematical precision, unless the context indicates otherwise. Instead, such geometric terms allow for variations due to manufacturing or equivalent functions. For example, if an element is described as "round" or "generally round," a component that is not precisely circular (e.g., one that is slightly oblong or is a many-sided polygon) is still encompassed by this description.

Method aspects or examples described herein can be machine or computer-implemented at least in part, for instance with one or more processors, associated memory, input and output devices. Some aspects or examples can include a computer-readable medium or machine-readable medium encoded with instructions operable to configure an electronic device to perform methods as described in the above aspects or examples. An implementation of such methods can include code, circuits, code modules, software modules, hardware modules or the like, such as or having microcode, assembly language code, a higher-level language code, hardwiring or the like. Such code can include computer readable instructions for performing various methods. The code may form portions of computer program products or is included in controllers, programmable logic controllers or the like having modules (e.g., circuits, software, subunits or the like) configured to implement the code and perform the various methods. Further, in an aspect or example, the code can be tangibly stored on one or more volatile, non-transitory, or non-volatile tangible computer-readable media, such as during execution or at other times. Aspects or examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), circuits and the like.

The above description is intended to be illustrative, and not restrictive. For example, the above-described aspects or examples (or one or more aspects thereof) may be used in combination with each other. Other embodiments can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as aspects, examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

1. A landmarking navigation system comprising:
one or more sensors configured to observe one or more features in a field or proximate to a field, the one or more sensors configured for installation with an agricultural vehicle;
one or more processors in communication with the one or more sensors, the one or more processors configured to:
landmark the one or more features, landmarking includes:
identifying the one or more features as one or more landmarks, respectively;
indexing coordinates to the one or more landmarks indicative of positions of the one or more landmarks; and
cataloging the one or more landmarks with indexed coordinates as one or more catalogued landmarks; and
landmark navigate the agricultural vehicle, landmark navigating includes:
observing the one or more features in the field with the one or more sensors;
comparing the observations of the one or more features with the one or more catalogued landmarks;
identifying the one or more features as the one or more catalogued landmarks, respectively; and
determining vehicle kinematics of the agricultural vehicle relative to the one or more catalogued landmarks.

2. The landmarking navigation system of claim 1, wherein determining vehicle kinematics of the agricultural vehicle relative to the one or more catalogued landmarks includes determining one or more of position, heading, vector, speed, acceleration, pitch, yaw or roll of the agricultural vehicle.

3. The landmarking navigation system of claim 1, wherein the agricultural vehicle includes one or more of a prime mover or an agricultural implement.

4. The landmarking navigation system of claim 1 comprising the agricultural vehicle.

5. The landmarking navigation system of claim 1, wherein the one or more sensors include one or more of a camera, video camera, stereo camera, radar, light detection and ranging (LIDAR) sensor, or ultrasound sensor.

6. The landmarking navigation system of claim 1, wherein identifying the one or more features as one or more landmarks, respectively, includes analyzing the one or more features with one or more of a machine learning algorithm or artificial intelligence technique.

7. The landmarking navigation system of claim 1, wherein indexing coordinates to the one or more landmarks includes indexing global coordinates to the one or more landmarks.

8. The landmarking navigation system of claim 7, wherein the global coordinates include latitude and longitude.

9. The landmarking navigation system of claim 1, wherein indexing coordinates to the one or more landmarks includes:
determining a global navigation satellite system (GNSS) position of the agricultural vehicle; and
determining the coordinates of the one or more landmarks relative to the GNSS position of the agricultural vehicle.

10. The landmarking navigation system of claim 9, wherein determining the coordinates of the one or more landmarks includes determining the coordinates of the one or more landmarks relative to the GNSS position of the agricultural vehicle based on the position and orientation of the one or more sensors.

11. The landmarking navigation system of 1, wherein the one or more sensors includes at least one stereo camera; and
indexing coordinates to the one or more landmarks includes determining the coordinates of the one or more landmarks relative to the position of the agricultural vehicle with the at least one stereo camera.

12. The landmarking navigation system of 1, wherein the one or more sensors includes at least one stereo camera; and
determining the vehicle kinematics of the agricultural vehicle includes determining the coordinates of the agricultural vehicle relative to the one or more catalogued landmarks with the at least one stereo camera.

13. The landmarking navigation system of claim 1, wherein comparing the observations of the one or more features with the one or more catalogued landmarks includes analyzing the one or more observations with one or more of a machine learning algorithm or artificial intelligence technique.

14. The landmarking navigation system of claim 1, wherein determining the vehicle kinematics of the agricultural vehicle includes determining the vehicle kinematics according to deviations between the observations of the one or more features with the one or more catalogued landmarks, respectively.

15. The landmarking navigation system of claim 14, wherein the deviations include one or more of a size deviation or an orientation deviation.

16. The landmarking navigation system of claim 1, wherein the one or more features include at least a first feature and a second feature and the one or more catalogued landmarks include at least a first catalogued landmark and a second catalogued landmark, wherein landmark navigating includes:
designating the first feature as the first catalogued landmark and determining the vehicle kinematics of the agricultural vehicle includes determining the vehicle kinematics relative to the first catalogued landmark;
designating the second feature as the second catalogued landmark and determining the vehicle kinematics of the agricultural vehicle includes determining the vehicle kinematics relative to the second catalogued landmark instead of the first catalogued landmark.

17. The landmarking navigation system of claim 16, wherein observing the one or more features includes observing at least the first and second features; and
designating the second feature as the second catalogued landmark is conducted as observing the first feature is ending.

18. The landmarking navigation system of claim 1, wherein the one or more processors are configured to calibrate the determining of vehicle kinematics of the agricultural vehicle with the one or more catalogued landmarks.

19. An autonomous agricultural vehicle control system comprising:
one or more sensors configured to observe one or more features in a field or proximate to a field, the one or more sensors configured for installation with an agricultural vehicle;
an actuator interface configured for communication with one or more actuators of the agricultural vehicle:
one or more processors in communication with the one or more sensors and the actuator interface, the one or more processors include:
a first navigation device configured to determine a position of the agricultural vehicle;
a second landmark navigation device configured to:
identify the one or more features as one or more landmarks, respectively; and
index coordinates to the one or more landmarks indicative of positions of the one or more landmarks;
an autonomous operation controller configured to:
receive an autonomous operation profile that includes instructions for operating in the field;
assess the first navigation device as:
operable and electing the first navigation device, or
inoperable and electing the second landmark navigation device; and
operating the agricultural vehicle with the one or more actuators according to the autonomous operation profile and one of the first navigation device or the second landmark navigation device according to the operable or inoperable assessment of the first navigation device.

20. The autonomous agricultural vehicle control system of claim 19, wherein the one or more processors are configured to calibrate one or more of the first or second landmark navigation devices with the landmarks and indexed coordinates.

21. The autonomous agricultural vehicle control system of claim 19, wherein the instructions for operating in the field include one or more of autonomous driving instructions or autonomous implement operating instructions.

22. The autonomous agricultural vehicle control system of claim 19, wherein operating the agricultural vehicle includes determining vehicle kinematics of the agricultural vehicle relative to the indexed coordinates of the one or more landmarks.

23. The autonomous agricultural vehicle control system of claim 19 comprising the agricultural vehicle.

24. The autonomous agricultural vehicle control system of claim 19, wherein the one or more sensors include one or more of a camera, video camera, stereo camera, radar, light detection and ranging (LIDAR) sensor, or ultrasound sensor.

25. The autonomous agricultural vehicle control system of claim 19, wherein identifying the one or more features as one or more landmarks, respectively, includes analyzing the one or more features with one or more of a machine learning algorithm or artificial intelligence technique.

26. The autonomous agricultural vehicle control system of claim 19, wherein indexing coordinates to the one or more landmarks includes indexing global coordinates to the one or more landmarks.

27. The autonomous agricultural vehicle control system of claim 26, wherein the global coordinates include latitude and longitude.

28. The autonomous agricultural vehicle control system of claim 19, wherein indexing coordinates to the one or more landmarks includes:
determining a global navigation satellite system (GNSS) position of the agricultural vehicle; and
determining the coordinates of the one or more landmarks relative to the GNSS position of the agricultural vehicle.

29. The autonomous agricultural vehicle control system of claim 28, wherein determining the coordinates of the one or more landmarks includes determining the coordinates of the one or more landmarks relative to the GNSS position of the agricultural vehicle based on the position and orientation of the one or more sensors.

30. The autonomous agricultural vehicle control system of 19, wherein the one or more sensors includes at least one stereo camera; and
indexing coordinates to the one or more landmarks includes determining the coordinates of the one or more landmarks relative to the position of the agricultural vehicle with the at least one stereo camera.

31. The autonomous agricultural vehicle control system of 19, wherein the one or more sensors includes at least one stereo camera; and
operating the agricultural vehicle according to the autonomous operation profile includes determining the coordinates of the agricultural vehicle relative to the one or more catalogued landmarks with the at least one stereo camera.

32. The autonomous agricultural vehicle control system of claim 19, wherein the one or more features include at least a first feature and a second feature and the one or more landmarks include at least a first catalogued landmark and a second catalogued landmark, wherein landmark navigating includes:
designating the first feature as the first catalogued landmark and operating the agricultural vehicle includes determining the vehicle kinematics relative to the first catalogued landmark;
designating the second feature as the second catalogued landmark and operating the agricultural vehicle includes determining the vehicle kinematics relative to the second catalogued landmark instead of the first catalogued landmark.

33. The autonomous agricultural vehicle control system of claim 32, wherein designating the second feature as the second catalogued landmark is conducted as observation of the first feature is lost by the one or more sensors.
